# FASCICULE DE BREVET EUROPEEN

(11) **EP 1 500 838 B1**
(45) Date de publication et mention de la délivrance du brevet: **07.12.2005**
(21) Numéro de dépôt: 04291325.1
(22) Date de dépôt: 26.05.2004
(51) Int. Cl.: F16D 41/06, F16D 41/07

(54) **Dispositif de roue libre, poulie et alternateur équipés d'une roue libre**
Freilaufvorrichtung, Riemenscheibe und Generator mit einem Freilauf
Freewheel device, pulley and alternator with a freewheel

(30) Priorité: 22.07.2003 FR 0308939
(43) Date de publication de la demande: 26.01.2005
(73) Titulaire: Aktiebolaget SKF, 415 50 Göteborg (SE)
(72) Inventeur: Girardin, Carole, 37390 Charentilly (FR); Petit, Régis, 37330 Courcelles de Touraine (FR)
(74) Mandataire: Casalonga, Axel

(56) Documents cités:
- DE-A- 19 535 889
- GB-A- 1 027 977
- US-A- 5 433 305

## Description

La présente invention concerne le domaine des dispositifs de roue libre et des cages pour dispositifs de roue libre.

Les dispositifs de roue libre comprennent généralement une bague extérieure ou un logement muni d'un chemin de glissement intérieur cylindrique pour les éléments de coincement de la roue libre, une bague intérieure ou un arbre muni d'un chemin de glissement extérieur cylindrique pour lesdits éléments de coincement de la roue libre, et une roue libre située entre le chemin de glissement de la bague extérieure et le chemin de glissement de la bague intérieure ou de l'arbre.

La roue libre comprend une cage simple, ou une cage double constituée de deux cages concentriques, munies de fenêtres dans lesquelles sont disposées des éléments de coincement assurant, par coincement ou par glissement entre les deux chemins de glissement, un accouplement unidirectionnel entre les bagues extérieure et intérieure.

La roue libre est ainsi capable de transmettre dans un sens un couple entre les bagues extérieure et intérieure et dans l'autre sens de laisser une rotation libre.

Pour rendre plus rapide le basculement, par exemple des cames dans le sens du coincement, on peut prévoir un ressort se présentant sous la forme d'une bande exerçant sur chaque élément de coincement un couple de rappel tendant à maintenir en permanence les éléments de coincement en contact avec les chemins de glissement.

De tels dispositifs sont connus, par exemple par les documents US 2 824 635 et DE-A-19 535 889, et donnent globalement satisfaction tout en présentant certains inconvénients.

La mise en place par un opérateur de la roue libre comprenant la cage, les cames et le ressort de rappel entre l'arbre et le logement ou entre la bague intérieure et le logement, est relativement difficile du fait de l'interférence des cames avec l'arbre et le logement ou avec la bague intérieure et le logement lors de l'introduction de la roue libre. Le ressort, qui a pour but de faciliter le basculement des cames en position de blocage, tend à les redresser en position radiale, accroissant ainsi l'encombrement radial de la roue libre. En fonctionnement en roue libre, les cames frottent en permanence sur un chemin de glissement métallique, d'où la nécessité d'une lubrification pour éviter le risque de grippage des cames. Ce type de roue libre est inapte à supporter des charges radiales et doit obligatoirement être associé à des paliers annexes aptes à reprendre les charges radiales. Ceci est le cas par exemple dans le domaine des poulies sur lesquelles passe une courroie tendue.

La présente invention vise à remédier à ces inconvénients.

La présente invention propose une roue libre de montage aisé et assurant un glissement satisfaisant.

Le dispositif de roue libre, selon un aspect de l'invention, est du type comprenant une pluralité d'éléments de coincement, au moins une cage de maintien desdits éléments de coincement, un élément extérieur comprenant un alésage pourvu d'alvéoles intérieures et un élément intérieur comprenant une surface extérieure pourvue d'alvéoles extérieures, chaque élément de coincement coopérant avec une alvéole intérieure et une alvéole extérieure, l'un des éléments, extérieur ou intérieur, étant flexible radialement au niveau desdites alvéoles et formant avec les éléments de coincement un moyen de serrage pour la transmission d'un couple.

L'encombrement de la roue libre est défini par les éléments intérieur et extérieur et reste donc relativement constant, ce qui facilite le montage de la roue libre dans son logement et sur un arbre et une bague intérieure. Le contact de friction est assuré entre l'un des éléments intérieur ou extérieur, et la surface correspondante. On évite ainsi le besoin de lubrification dû au risque de grippage des cames. La surface de friction est située radialement à l'opposé des alvéoles.

Dans un mode de réalisation de l'invention, la cage de maintien est disposée radialement entre les éléments extérieur et intérieur et est pourvue de fenêtres dans lesquelles les éléments de coincement sont aptes à être disposés.

Dans un mode de réalisation de l'invention, l'un des éléments, extérieur ou intérieur, est rigide radialement et l'autre est flexible radialement. L'élément flexible est apte à se déformer lors du basculement des cames en position de blocage pour augmenter la friction et solidariser ensemble la roue libre et la pièce en contact de friction avec ledit élément flexible. L'élément rigide peut se présenter sous la forme d'un anneau de section généralement rectangulaire. L'élément flexible peut comprendre une pluralité de barrettes axiales et une pluralité de portions circonférentielles courtes de liaison entre les barrettes, ledit élément flexible s'inscrivant dans un volume annulaire de section généralement rectangulaire. Les portions circonférentielles peuvent être disposées aux extrémités des barrettes.

Dans un mode de réalisation de l'invention, les portions circonférentielles sont alternées circonférentiellement, de façon qu'une barrette soit liée par une extrémité axiale à la barrette précédente et par l'autre extrémité axiale à la barrette suivante.

Avantageusement, l'élément flexible est monobloc. Les alvéoles de l'élément flexible peuvent être formées dans les barrettes. On entend généralement par « alvéole », une concavité formée de façon non traversante dans une pièce.

Dans un mode de réalisation de l'invention, le dispositif comprend un support pourvu d'une surface axiale apte à coopérer avec l'élément flexible.

Dans un mode de réalisation de l'invention, le dispositif comprend une pluralité d'éléments roulants disposés radialement entre les éléments extérieur et intérieur. Les éléments roulants peuvent être des rouleaux maintenus par la cage de maintien. Les rouleaux et les éléments de coincement peuvent être disposés de façon circonférentiellement alternée dans les fenêtres formées dans la cage de maintien.

La présente invention propose également une poulie comprenant un moyeu, une jante et un dispositif de roue libre comprenant une pluralité d'éléments de coincement, au moins une cage de maintien des éléments de coincement, un élément extérieur comprenant un alésage pourvu d'alvéoles intérieures et un élément intérieur comprenant une surface extérieure pourvue d'alvéoles extérieures, chaque élément de coincement coopérant avec une alvéole intérieure et une alvéole extérieure, l'un des éléments, extérieur ou intérieur, étant flexible radialement au niveau desdites alvéoles et formant avec les éléments de coincement un moyen de serrage pour la transmission d'un couple.

*L'élément extérieur peut être solidaire de la jante. L'élément intérieur peut être solidaire du moyeu.*

L'élément extérieur peut être rigide, tandis que l'élément intérieur peut être flexible.

L'invention propose également un alternateur pourvu d'une partie non tournante et d'une partie tournante, la partie tournante comprenant un arbre et une poulie montée sur l'arbre. La poulie comprend une jante et un dispositif de roue libre, du type comprenant une pluralité d'éléments de coincement, au moins une cage de maintien desdits éléments de coincement, un élément extérieur comprenant un alésage pourvu d'alvéoles intérieures et un élément intérieur comprenant une surface extérieure pourvue d'alvéoles extérieures, chaque élément de coincement coopérant avec une alvéole intérieure et une alvéole extérieure, l'un des éléments extérieur ou intérieur étant flexible radialement au niveau desdites alvéoles et formant un moyen de friction.

En d'autres termes, la roue libre, en plus d'éléments de coincement, d'au moins une cage et en général d'un ressort, comprend un manchon extérieur et un manchon intérieur, chacun formant interface avec respectivement l'alésage et la surface extérieure entre lesquels la roue libre est disposée. Les deux manchons, extérieur et intérieur, présentent une section transversale annulaire, d'encombrement radial sensiblement constant, facilitant grandement le montage de la roue libre entre ledit alésage et ladite surface extérieure. L'opérateur chargé du montage n'a plus à se préoccuper de la position des cames lors du montage. En outre, le fait que l'un des manchons soit prévu pour glisser sur ledit alésage ou sur ladite surface extérieure évite le contact de friction entre les cames et une surface métallique qui nécessite une lubrification. On peut donc se passer de lubrification, ce qui est plus simple et plus économique, et le risque de grippage des éléments de coincement est très significativement réduit.

Lorsque la roue libre comprend en outre des éléments de roulement tels que des rouleaux, il est possible de lui faire supporter des charges radiales en l'absence de paliers voisins. On peut également envisager que les éléments de roulement soient des billes disposées en une ou plusieurs rangées afin de reprendre également des charges axiales.

Ainsi, les éléments de coincement frottent dans les alvéoles lors de leur basculement mais pas en position de roue libre. Le manchon souple comprend une surface de glissement du côté opposé aux alvéoles.

La présente invention sera mieux comprise à l'étude de la description détaillée de quelques modes de réalisation pris à titre d'exemples nullement limitatifs et illustrés par les dessins annexés, sur lesquels :
- la figure 1 est une vue en coupe axiale d'une poulie selon un premier mode de réalisation de l'invention ;
- la figure 2 est une vue en perspective de l'élément souple de la poulie de la figure 1 ;
- la figure 3 est une vue en coupe transversale de la poulie de la figure 1 ;
- les figures 4 à 6 sont des vues correspondant respectivement aux figures 1 à 3 d'une poulie selon un second mode de réalisation de l'invention ; et
- la figure 7 est une vue de détail de la figure 6.

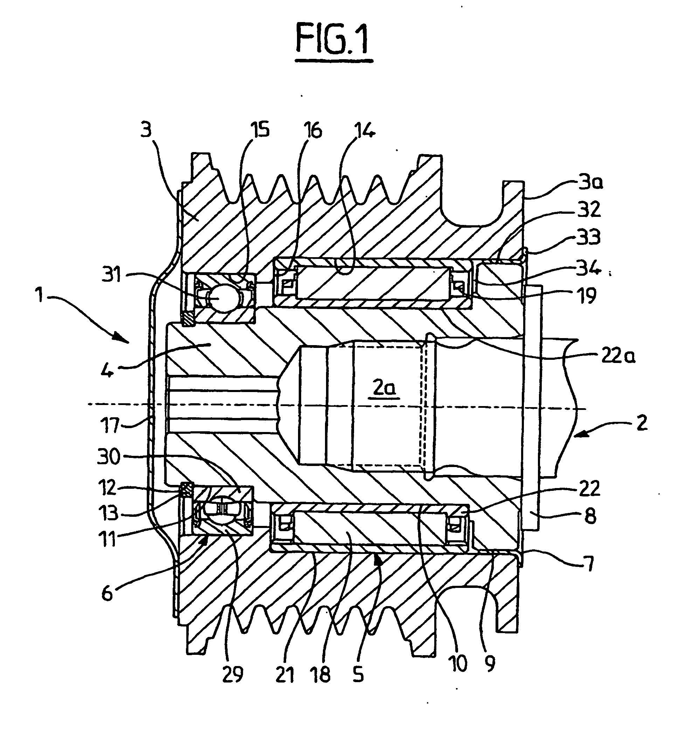

Comme on peut le voir sur les figures 1 à 3, une poulie 1 est montée sur un arbre 2, tel qu'un arbre d'alternateur, et comprend une jante 3, de forme annulaire, présentant une surface extérieure adaptée à une courroie de type poly-V, un moyeu 4 solidaire de l'arbre 2, une roue libre 5 disposée entre la jante 3 et le moyeu 4, un palier à roulement 6 et un palier lisse 7 également disposés entre la jante 3 et le moyeu 4.

Plus précisément, le moyeu 4 est vissé sur une extrémité 2a de l'arbre 2 s'étendant au-delà d'une plaque annulaire 8 fixée sur ledit arbre 2 et en saillie radiale vers l'extérieur par rapport audit arbre 2. Le moyeu 4 vient en butée contre la collerette annulaire 8. Le moyeu 4 comprend une surface extérieure cylindrique étagée avec, en partant du voisinage de la collerette annulaire 8, une portée 9 de grand diamètre, puis une portée 10 de diamètre intermédiaire et enfin une portée 11 de petit diamètre, avec des épaulements radiaux séparant les portées 9 et 10 et les portées 10 et 11. Sur la portée de petit diamètre 11, est formée une rainure annulaire 12 dans laquelle est disposé un circlips 13.

La jante 3 comprend un alésage étagé avec, en partant de la collerette annulaire 8, une portée de grand diamètre 14 et une portée de petit diamètre 15. Les portées 14 et 15 sont séparées par une saillie angulaire 16 dirigée radialement vers l'intérieur. A l'opposé de la plaque annulaire 8, un capot 17 de forme circulaire vient obturer l'alésage de la jante 3 en évitant l'intrusion de corps étrangers.

La roue libre 5 comprend une pluralité d'éléments de coincement 18, ici des cames, allongés axialement, et une cage 19 de forme générale annulaire, en tôle, pourvue de fenêtres dans lesquelles sont disposés les éléments de coincement 18. Les éléments de coincement 18 présentent deux faces planes parallèles entre elles et à l'axe longitudinal dudit élément de coincement. Les deux faces planes se raccordent à chacune de leur extrémité radiale à une surface arrondie à génératrice droite parallèle à l'axe longitudinal de la came. La cage 19 peut être pourvue de protubérances radiales 19a voisines des fenêtres pour former une butée apte à limiter les possibilités de basculement angulaire des éléments de coincement dans les fenêtres. Les portions arrondies des éléments de coincement dépassent radialement de part et d'autre de la cage 19.

La roue libre 5 comprend en outre un manchon extérieur 21 et un manchon intérieur 22 réalisés tous deux en matériau synthétique, par exemple moulé.

Le manchon extérieur 21 annulaire est pourvu d'une pluralité d'alvéoles 23, de forme concordante à celle des portions arrondies des éléments de coincement 18, de façon que l'extrémité radiale extérieure des éléments de coincement 18 soit en saillie dans lesdites alvéoles 23. En d'autres termes, les alvéoles 23 sont allongées axialement et présentent un profil en section droite en forme d'arc de cercle. Le nombre d'alvéoles 23 sera supérieur ou égal à celui des éléments de coincement 18. Le manchon extérieur 21 est disposé dans la portée de grand diamètre 14 de l'alésage de la jante 3, en contact avec la saillie radiale 16. Le manchon 21 est circulairement continu et est rectangulaire en section axiale.

Le manchon intérieur 22 comprend également des alvéoles 24 aptes à coopérer avec les portions arrondies des éléments de coincement 18. Les alvéoles 24 sont allongées axialement et présentent un profil en section droite en forme d'arc de cercle pour accueillir l'extrémité radiale intérieure des éléments de coincement 18. Le manchon intérieur 22 présente une forme générale annulaire avec des encoches axiales 25 axialement alternées et formées dans la portion de manchon séparant deux alvéoles 24 sur la majeure partie de la longueur axiale dudit manchon 22.

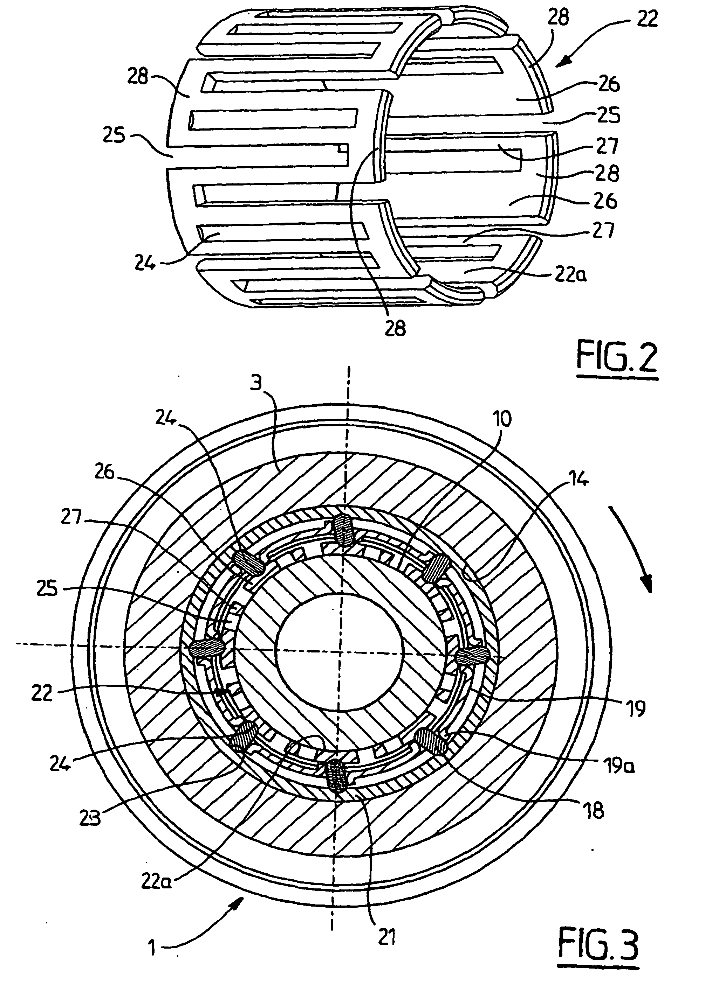

Comme on peut le voir sur la figure 2, il est prévu deux encoches 25 entre deux alvéoles 24. En d'autres termes, le manchon intérieur 22 comprend une pluralité de barrettes axiales et de portions circonférentielles relativement courtes, occupant chacune un angle de l'ordre de 40°. Une alvéole 24 est formée dans une barrette large 26 entourée circonférentiellement par deux barrettes étroites 27 dépourvues d'alvéoles. Chaque barrette étroite 27 est entourée par deux barrettes larges 26. Une barrette large 26 est reliée par une de ses extrémités à une barrette étroite 27 au moyen d'une portion circonférentielle 28 et par l'autre de ses extrémités axiales à la barrette étroite 27 du côté opposé par une portion circonférentielle 28 formée axialement à l'opposé.

Le manchon intérieur 22 présente donc une structure en zigzag le rendant particulièrement souple radialement. Le manchon intérieur 22 est disposé sur la portée cylindrique 10 de diamètre intermédiaire du moyeu 4 en contact avec l'épaulement radial séparant ladite portée 10 de la portée 9 de grand diamètre. L'alésage du manchon intérieur 22 présente une surface cylindrique 22a permettant aux barrettes de venir épouser par leur surface intérieure 22a la partie cylindrique 10 du moyeu. On peut prévoir de réaliser le manchon intérieur 22 par moulage en polyamide ou en d'autres matériaux aptes à fonctionner et à pouvoir glisser sur la portée 10 du moyeu 4, si possible sans exiger de lubrifiant.

Le palier à roulement 6 peut être de type conventionnel et comprendre une bague extérieure massive 29, une bague intérieure massive 30 et une rangée d'éléments roulants 31, ici des billes, disposés entre des pistes de roulement formées respectivement dans les bagues extérieure 29 et intérieure 30. Le palier à roulement 6 peut être pourvu en outre de joints d'étanchéité solidaires de l'une des bagues et venant frotter sur une portée de l'autre bague. La bague extérieure 29 est montée, par exemple emmanchée, dans la portée 15 de petit diamètre de l'alésage de la jante 3 en contact avec la saillie radiale 16 séparant les portées 14 et 15. La bague intérieure 30 est montée, par exemple emmanchée, sur la portée de petit diamètre 11 du moyeu 4 disposé à l'opposé de la plaque annulaire 8 de l'arbre 2. La bague intérieure 30 est en contact, d'une part, avec l'épaulement radial séparant les portées 10 et 11, et, d'autre part, avec le circlips 13 décrit plus haut. Le palier à roulement 6 est donc solidarisé axialement avec le moyeu 4. La saillie radiale 16, en contact avec la bague extérieure 29, empêche la jante 3 de se déplacer axialement à l'opposé de l'arbre 2.

Le palier lisse 7 se présente sous la forme d'un anneau en matériau à faible coefficient de friction, présentant une portion axiale 32 disposée entre la portée 9 de grand diamètre du moyeu 4 et la portée 14 de grand diamètre de la jante 3 au voisinage de la roue libre 5, une portion radiale dirigée vers l'extérieur 33, en contact avec une surface radiale frontale 3a de la jante 3, du côté de la plaque annulaire 8 de l'arbre 2, et une portion radiale 34 s'étendant vers l'intérieur au voisinage de la roue libre 5. Ainsi, l'ensemble constitué par le palier à roulement 6 et le palier lisse 7 permet une rotation relative entre la jante 3 de la poulie et le moyeu 4 tout en reprenant les efforts radiaux et axiaux entre ces éléments.

Le fait de prévoir un dispositif de roue libre dans un système moyeu et poulie, comme il en existe par exemple dans les poulies d'alternateur débrayables, permet d'éviter de transmettre les acyclismes d'un moteur à l'alternateur par l'intermédiaire de la courroie et de ménager ainsi la courroie d'entraînement qui coopère avec la poulie. Le manchon extérieur 21 de la roue libre 5 peut être fixé dans la jante 3 et être solidaire en rotation. Une chemise ou un insert métallique peuvent être prévus pour réaliser un emmanchement serré efficace du manchon extérieur 21 dans l'alésage de la jante 3. Le manchon intérieur 22 est centré sur le moyeu 4 de la poulie 1 et reste en contact avec la portée 10 du moyeu 4 par élasticité radiale.

Lorsque la poulie 1 a un mouvement de rotation relatif dans le sens de la flèche illustrée sur la figure 3, par rapport au moyeu 4 de la poulie 1 et à l'arbre 2 d'alternateur, les éléments de coincement 18 ont tendance à basculer dans le sens horaire et donc à exercer un effort radial sur le manchon extérieur 21 et sur les barrettes larges 26 du manchon intérieur 22 qui viennent serrer radialement par la surface 22a sur la portée 10 du moyeu 4. Les barrettes 26 et le moyeu 4 sont alors solidarisés par friction et on transmet alors un couple entre la jante 3 et le moyeu 4 de la poulie 1 accouplé à l'arbre 2, ces éléments tournant alors à la même vitesse angulaire. Si on inverse le mouvement relatif de la jante 3 par rapport au moyeu 4, les éléments de coincement 18 basculent dans l'autre sens, relâchant ainsi les efforts radiaux sur les barrettes 26 du manchon intérieur 22. Il se produit alors un glissement entre le moyeu 4 et le manchon intérieur 22, l'arbre 2 étant alors désaccouplé de la courroie, non représenté, entraînant la jante 3.

Dans l'exemple illustré, la poulie 1 comporte également d'un côté un palier à roulement 6, et de l'autre côté un palier lisse 7 destiné à maintenir un centrage de la jante 3 par rapport au moyeu 4 et à absorber les efforts radiaux, en particulier lorsque le dispositif fonctionne en roue libre. On pourrait, bien entendu, à titre de variante, utiliser deux paliers à roulement ou deux paliers lisses.

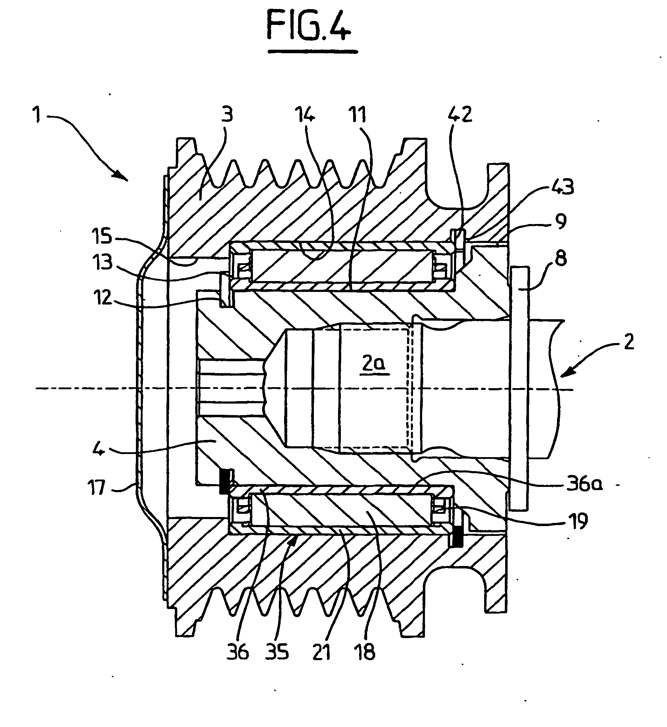

Dans le mode de réalisation illustré sur les figures 4 à 7, les références des éléments semblables à ceux des figures précédentes ont été conservées. La poulie 1 est ici dépourvue de palier à roulement et/ou de palier lisse. Le moyeu 4 peut être légèrement plus court, ce qui peut présenter un intérêt en termes de réduction de masse. Le moyeu 4 comprend sur sa surface extérieure cylindrique deux portées, une portée de grand diamètre 9 axialement adjacente à la plaque annulaire 8 et une portée axiale 11 de petit diamètre disposée du côté axialement opposé, les portées 9 et 11 étant séparées par un épaulement radial légèrement chanfreiné. La jante 3 est pourvue sur son alésage de deux portées 14 et 15 séparées par un simple épaulement radial. La roue libre 35 est disposée entre la portée de petit diamètre 11 du moyeu 4 et la portée de grand diamètre 14 de la jante 3 tout en étant en contact avec l'épaulement séparant les portées 9 et 11 du moyeu 4, du côté de la plaque annulaire 8 et avec le circlips 13 disposé dans la rainure annulaire 12 du côté axialement opposé. La roue libre 35 est également en contact avec l'épaulement radial séparant les portées 14 et 15 de la jante 3.

La portée de grand diamètre 9 du moyeu 4 est séparée de la portée de grand diamètre 14 de la jante 3 par un faible espace radial assurant une étanchéité aux éléments extérieurs indésirables, tandis que la portée de petit diamètre 15 de la jante 3 est séparée de l'extrémité de la portée de petit diamètre 11 du moyeu 4 par un espace radial.

La roue libre 35 comprend un manchon extérieur 21 et des éléments de coincement 18 semblables à ceux du mode de réalisation précédent. Le manchon intérieur 36 présente une forme générale annulaire avec des barrettes 26 pourvues d'alvéoles 24 pour les éléments de coincement 18 et des encoches 25 analogues à ceux du manchon intérieur 22. Toutefois, les barrettes étroites visibles sur la figure 2, sont ici remplacées par les barrettes 37 nettement plus larges que les barrettes 26 et pourvues sur leur surface extérieure de rainures 38 allongées axialement et débouchant à l'une des extrémités axiales dudit manchon intérieur 36.

Le manchon intérieur 36 est retenu axialement entre le circlips 13 d'un côté et l'épaulement radial du moyeu 4 séparant les portées 9 et 11 de l'autre côté. Le manchon intérieur 36 vient épouser par son alésage cylindrique 36a la partie cylindrique 11 du moyeu 4. Le manchon extérieur 21 est axialement solidaire de la jante 3 grâce, d'une part, au contact avec l'épaulement radial séparant les portées 14 et 15 de ladite jante 3, et, de l'autre côté, avec un circlips 43 disposé dans une rainure 42 formée dans ladite jante 3.

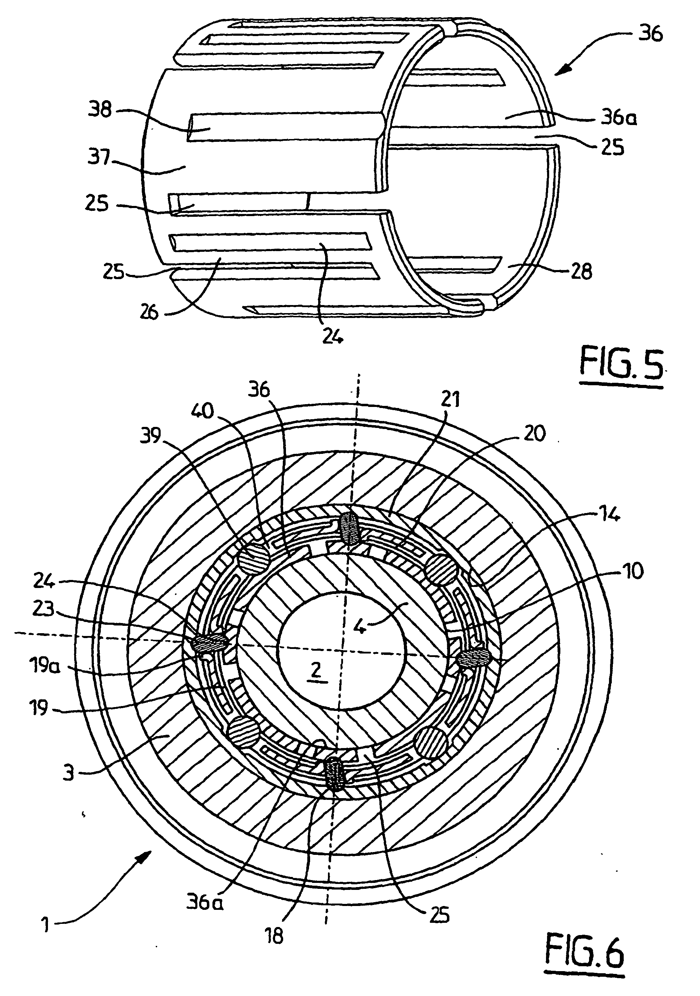

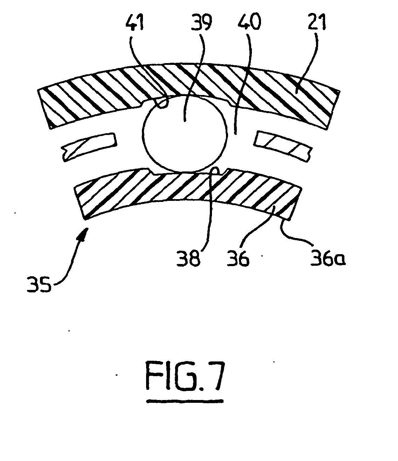

Dans les rainures 38, sont disposés des rouleaux cylindriques 39, voir figure 6, sensiblement au même niveau radial que les éléments de coincement 18. Pour loger les rouleaux 39, la cage 19 est pourvue de fenêtres 40 occupant un secteur angulaire supérieur à celui occupé par les rouleaux 39 pour laisser auxdits rouleaux la possibilité d'un certain déplacement à l'intérieur desdites fenêtres. De même, les rainures 38 formées sur la périphérie du manchon intérieur 36 occupent un secteur angulaire suffisant pour laisser aux rouleaux 39 la possibilité d'un certain déplacement angulaire, voir figure 7. Le manchon extérieur 21 est pourvu, sur son alésage, de rainures 41 également plus larges angulairement que lesdits rouleaux 39, pour permettre ainsi un déplacement angulaire entre le manchon extérieur 21 et le manchon intérieur 36, avec rotation et déplacement des rouleaux 39 en vue d'autoriser le basculement des éléments de coincement.

Dans le mode de réalisation illustré, il est prévu quatre rouleaux 39 circonférentiellement alternés avec quatre éléments de coincement 18. Bien entendu, en variante, on pourrait prévoir de remplacer les rouleaux 39 par les billes disposées suivant une ou plusieurs rangées ou encore par des aiguilles. Les rouleaux 39 permettent à la roue libre d'assurer le centrage et la transmission des efforts radiaux entre la jante 3 et le moyeu 4 de la poulie, ce qui rend inutiles les roulements ou paliers lisses annexes. La forme des rainures 38 et 41 prévue pour coopérer avec les rouleaux 39 autorise le déplacement angulaire relatif limité entre le manchon intérieur 36, les rouleaux 39 et le manchon extérieur 21, permettant ainsi un basculement des éléments de coincement 18.

Le dispositif de roue libre offre donc de nombreux avantages, en se présentant sous la forme d'une cartouche compacte facile à manipuler sans risque de perte d'éléments et facile à monter entre un moyeu et un logement par simple emmanchement. Les éléments de coincement et éventuellement les éléments roulants, sont parfaitement protégés pendant le transport et la manipulation de la cartouche par les manchons intérieur et extérieur. Les éléments de coincement ne subissent aucune usure, puisque ne frottant pas sur des chemins de glissement lorsque la roue libre ne transmet pas de couple.

Avantageusement, le dispositif peut fonctionner dans certaines applications sans lubrifiant, car le risque de grippage d'éléments de coincement métalliques sur un chemin de glissement métallique est évité. On pourra par exemple choisir à cet effet pour la réalisation du manchon 22 un polyamide PA 6.6 chargé de bisulfure de molybdène MoS₂ améliorant les propriétés de friction dudit polyamide. La roue libre, selon le deuxième mode de réalisation de l'invention, permet en outre de s'affranchir des paliers à roulement ou des paliers lisses annexes, d'où une réalisation particulièrement économique, une diminution du nombre d'éléments à assembler et éventuellement un gain de masse et d'encombrement.

Bien entendu, on peut prévoir en variante un dispositif de roue libre dans lequel la structure des manchons intérieur et extérieur soit inversée avec un manchon intérieur solidaire du moyeu et un manchon extérieur apte à glisser dans l'alésage de la jante.

Grâce à l'invention, on dispose d'une roue libre pourvue de surfaces de frottement réalisées en matériau synthétique diminuant très fortement le risque de grippage sur une surface métallique d'un autre élément et réduisant fortement l'usure des cames basculantes.

En outre, le montage d'une telle roue libre est facilité par le fait que son diamètre extérieur et son diamètre intérieur sont relativement constants, quelle que soit la position des cames basculantes lors du montage.

## Revendications

1. Dispositif de roue libre (5), du type comprenant une pluralité d'éléments de coincement (18), et au moins une cage (19) de maintien desdits éléments de coincement, **caractérisé par le fait qu'**il comprend un élément extérieur (21) comprenant un alésage pourvu d'alvéoles intérieures (23) et un élément intérieur (22) comprenant une surface extérieure pourvue d'alvéoles extérieures (24), chaque élément de coincement (18) coopérant avec une alvéole intérieure et une alvéole extérieure, l'un des éléments, extérieur ou intérieur, étant flexible radialement au niveau desdites alvéoles et formant avec les éléments de coincement un moyen de serrage pour la transmission d'un couple.

2. Dispositif selon la revendication 1, **caractérisé par le fait que** la cage de maintien (19) est disposée radialement entre les éléments extérieur (21) et intérieur (22) et est pourvue de fenêtres dans lesquelles les éléments de coincement (18) sont aptes à être disposés.

3. Dispositif selon la revendication 1 ou 2, **caractérisé par le fait que** l'un des éléments, extérieur ou intérieur, est rigide radialement et l'autre est flexible radialement.

4. Dispositif selon la revendication 3, **caractérisé par le fait que** l'élément rigide se présente sous la forme d'un anneau de section généralement rectangulaire.

5. Dispositif selon la revendication 3 ou 4, **caractérisé par le fait que** l'élément flexible comprend une pluralité de barrettes axiales (26) et une pluralité de portions circonférentielles (28) courtes de liaison entre les barrettes, ledit élément flexible s'inscrivant dans un volume annulaire de section généralement rectangulaire.

6. Dispositif selon la revendication 5, **caractérisé par le fait que** les portions circonférentielles (28) sont disposées aux extrémités des barrettes (26).

7. Dispositif selon la revendication 5 ou 6, **caractérisé par le fait que** les portions circonférentielles (28) sont alternées circonférentiellement de façon qu'une barrette (26) soit liée par une extrémité à la barrette précédente et par l'autre extrémité à la barrette suivante.

8. Dispositif selon l'une quelconque des revendications 5 à 7, **caractérisé par le fait que** l'élément flexible est monobloc.

9. Dispositif selon l'une quelconque des revendications 5 à 8, **caractérisé par le fait que** les alvéoles de l'élément flexible sont formées dans les barrettes.

10. Dispositif selon l'une quelconque des revendications précédentes, **caractérisé par le fait qu'**il comprend un support comprenant une surface axiale (10) apte à coopérer avec l'élément flexible.

11. Dispositif selon l'une quelconque des revendications précédentes, **caractérisé par le fait qu'**il comprend une pluralité d'éléments roulants disposés radialement entre les éléments extérieur (21) et intérieur (36).

12. Dispositif selon la revendication 11, **caractérisé par le fait que** les éléments roulants sont des rouleaux (39) maintenus par ladite cage de maintien (19).

13. Poulie (1) comprenant un moyeu (4), une jante (3) et un dispositif de roue libre (5), du type comprenant une pluralité d'éléments de coincement (18), et au moins une cage (19) de maintien desdits éléments de coincement, **caractérisée par le fait que** le dispositif de roue libre (5) comprend un élément extérieur (21) comprenant un alésage pourvu d'alvéoles intérieures (23) et un élément intérieur (22) comprenant une surface extérieure pourvue d'alvéoles extérieures (24), chaque élément de coincement (18) coopérant avec une alvéole intérieure et une alvéole extérieure, l'un des éléments, extérieur ou intérieur, étant flexible radialement au niveau desdites alvéoles et formant un moyen de friction.

14. *Poulie selon la revendication 13, **caractérisée par le fait que** l'élément extérieur (21)* est *solidaire de la jante (3).*

15. *Poulie selon la revendication 13, **caractérisée par le fait que** l'élément intérieur (22) est solidaire du moyeu (4).*

16. Poulie selon la revendication 13, 14 ou 15, **caractérisée par le fait que** l'élément extérieur est rigide et l'élément intérieur est flexible.

17. Alternateur comprenant une partie non tournante, et une partie tournante, la partie tournante étant pourvue d'un arbre (2) et d'une poulie (1) montée sur l'arbre, la poulie (1) comprenant une jante (3) et un dispositif de roue libre (5), du type comprenant une pluralité d'éléments de coincement (18), et au moins une cage (19) de maintien desdits éléments de coincement, **caractérisé par le fait que** le dispositif de roue libre (5) comprend un élément extérieur (21) comprenant un alésage pourvu d'alvéoles intérieures (23) et un élément intérieur (22) comprenant une surface extérieure pourvue d'alvéoles extérieures (24), chaque élément de coincement (18) coopérant avec une alvéole intérieure et une alvéole extérieure, l'un des éléments, extérieur ou intérieur, étant flexible radialement au niveau desdites alvéoles et formant avec les éléments de coincement un moyen de serrage pour la transmission d'un couple.

## Patentansprüche

1. Freilaufanordnung (5) in der Bauart mit einer Vielzahl von Klemmkörpern (18) und wenigstens einem Käfig (19) zum Halten der Klemmköper, **dadurch gekennzeichnet, dass** zu der Anordnung ein äußeres Element (21), das einen zylindrischen Innenraum aufweist, der mit inneren Zellen (23) versehen ist, und ein inneres Element (22) gehören, das eine Außenfläche aufweist, die mit äußeren Zellen (24) versehen ist, wobei jeder Klemmköper (18) mit einer inneren Zelle und einer äußeren Zelle zusammenwirkt, und wobei das eine der Elemente, entweder das äußere oder das innere, in radialer Richtung auf der Höhe der Zellen nachgiebig ist und mit den Klemmkörpern ein Mittel zum Klemmen für die Übertragung eines Drehmomentes bildet.

2. Anordnung nach Anspruch 1, **dadurch gekennzeichnet, dass** der Lagerkäfig (19) in radialer Richtung zwischen den äußeren Elementen (21) und inneren Elementen (22) angeordnet ist und mit Fenstern ausgebildet ist, in denen sich die Klemmköper (18) unterbringen lassen.

3. Anordnung nach Anspruch 1 oder 2, **dadurch gekennzeichnet, dass** das eine der Elemente, sei dies das äußere oder das innere, in radialer Richtung starr ist und das andere in radialer Richtung nachgiebig ist.

4. Anordnung nach Anspruch 3, **dadurch gekennzeichnet, dass** das starre Element in Gestalt eines Rings mit einem im Wesentlichen rechteckigen Querschnitt ausgebildet ist.

5. Anordnung nach Anspruch 3 oder 4, **dadurch gekennzeichnet, dass** das nachgiebige Element eine Vielzahl von axialen Leisten (26) und eine Anzahl von kurzen, als Verbindung zwischen den Spangen dienenden Umfangsabschnitten (28) aufweist, wobei das nachgiebige Element in ein ringförmiges Volumen mit einem im Wesentlichen rechteckigen Querschnitt passt.

6. Anordnung nach Anspruch 5, **dadurch gekennzeichnet, dass** die Umfangsabschnitte (28) an den Enden der Leisten (26) angeordnet sind.

7. Anordnung nach Anspruch 5 oder 6, **dadurch gekennzeichnet, dass** sich die Umfangsabschnitte (28) in Umfangsrichtung in der Weise abwechseln, dass eine Leiste (26) über ein Ende mit der vorausgehenden Leiste und über das andere Ende mit der nachfolgenden Leiste verbunden ist.

8. Anordnung nach einem der Ansprüche 5 bis 7, **dadurch gekennzeichnet, dass** das nachgiebige Element einstückig hergestellt ist.

9. Anordnung nach einem der Ansprüche 5 bis 8, **dadurch gekennzeichnet, dass** die Zellen des nachgiebigen Elements in den Leisten ausgebildet sind.

10. Anordnung nach einem der vorhergehenden Ansprüche, **dadurch gekennzeichnet, dass** zu der Anordnung ein Träger gehört, der eine axiale Fläche (10) aufweist, die geeignet ist, um mit dem nachgiebigen Element zusammenzuwirken.

11. Anordnung nach einem der vorhergehenden Ansprüche, **dadurch gekennzeichnet, dass** zu der Anordnung eine Anzahl von Wälzkörpern (39) gehört, die in radialer Richtung zwischen dem äußeren Element (21) und dem inneren Element (36) angeordnet sind.

12. Anordnung nach Anspruch 11, **dadurch gekennzeichnet, dass** die Wälzköper Rollen (39) sind, die durch den Lagerkäfig (19) gehalten werden.

13. Riemenscheibe (1), zu der eine Nabe (4), ein Außenring (3) und eine Freilaufvorrichtung (5) von der Bauart gehören, die eine Vielzahl von Klemmkörpern (18) und wenigstens einen Käfig (19) zum Halten der Klemmköper aufweist, **dadurch gekennzeichnet, dass** die Freilaufvorrichtung (5) ein äußeres Element (21), das einen zylindrischen Innenraum aufweist, der mit inneren Zellen (23) versehen ist, und ein inneres Element (22) enthält, das eine Außenfläche aufweist, die mit äußeren Zellen (24) versehen ist, wobei jeder Klemmköper (18) mit einer inneren Zelle und einer äußeren Zelle zusammenwirkt und wobei eines der Elemente, entweder das äußere oder das innere, in radialer Richtung auf der Höhe der Zellen nachgiebig ist und ein Reibungsmittel bildet.

14. Riemenscheibe nach Anspruch 13, **dadurch gekennzeichnet, dass** das äußere Element (21) mit dem Außenring (3) starr verbunden ist.

15. Riemenscheibe nach Anspruch 13, **dadurch gekennzeichnet, dass** das innere Element (22) mit der Nabe (4) starr verbunden ist.

16. Riemenscheibe nach Anspruch 13, 14 oder 15, **dadurch gekennzeichnet, dass** das äußere Element starr ist und das innere Element nachgiebig ist.

17. Wechselstromgenerator, zu dem ein stillstehender Teil und ein umlaufender Teil gehören, wobei der umlaufende Teil mit einer Welle (2) und einer an der Welle befestigten Riemenscheibe (1) versehen ist, wobei die Riemenscheibe (1) einen Außenring (3) und eine Freilaufvorrichtung (5) in der Bauart mit einer Vielzahl von Klemmkörpern (18) und wenigstens einem Käfig (19) zum Halten der Klemmköper aufweist, **dadurch gekennzeichnet, dass** zu der Freilaufvorrichtung (5) ein äußeres Element (21), das einen mit inneren Zellen (23) versehenen zylindrischen Innenraum aufweist, und ein inneres Element (22) gehören, das eine mit äußeren Zellen (24) versehene Außenfläche aufweist, wobei jeder Klemmköper (18) mit einer inneren Zelle und einer äußeren Zelle zusammenwirkt und wobei das eine der Elemente, entweder das äußere oder das innere, in radialer Richtung auf der Höhe der Zellen nachgiebig ist und mit den Klemmkörpern ein Mittel zum Klemmen für die Übertragung eines Drehmomentes bildet.

## Claims

1. Freewheel device (5) of the type comprising a plurality of jamming elements (18) and at least one cage (19) for retaining the said jamming elements, **characterized in that** it comprises an outer element (21) comprising a bore provided with inner cells (23) and an inner element (22) comprising an outer surface provided with outer cells (24), each jamming element (18) engaging with an inner cell and an outer cell, one of the outer or inner elements being radially flexible at the level of the said cells and forming with the jamming elements a clamping means for the transmission of a torque.

2. Device according to Claim 1, **characterized in that** the retaining cage (19) is arranged radially between the outer (21) and inner (22) elements and is provided with windows in which the jamming elements (18) are able to be arranged.

3. Device according to Claim 1 or 2, **characterized in that** one of the outer or inner elements is radially rigid and the other is radially flexible.

4. Device according to Claim 3, **characterized in that** the rigid element takes the form of a ring of generally rectangular cross section.

5. Device according to Claim 3 or 4, **characterized in that** the flexible element comprises a plurality of axial strips (26) and a plurality of short circumferential portions (28) providing a connection between the strips, the said flexible element being inscribed in an annular volume of generally rectangular cross section.

6. Device according to Claim 5, **characterized in that** the circumferential portions (28) are arranged at the ends of the strips (26).

7. Device according to Claim 5 or 6, **characterized in that** the circumferential portions (28) are alternated circumferentially so that a strip (26) is connected by one end to the preceding strip and by the other end to the following strip.

8. Device according to any one of Claims 5 to 7, **characterized in that** the flexible element is in one piece.

9. Device according to any one of Claims 5 to 8, **characterized in that** the cells of the flexible element are formed in the strips.

10. Device according to any one of the preceding claims, **characterized in that** it comprises a support comprising an axial surface (10) capable of engaging with the flexible element.

11. Device according to any one of the preceding claims, **characterized in that** it comprises a plurality of rolling elements arranged radially between the outer (21) and inner (36) elements.

12. Device according to Claim 11, **characterized in that** the rolling elements are rollers (39) retained by the said retaining cage (19).

13. Pulley (1) comprising a hub (4), a rim (3) and a freewheel device (5) of the type comprising a plurality of jamming elements (18) and at least one cage (19) for retaining the said jamming elements, **characterized in that** the freewheel device (5) comprises an outer element (21) comprising a bore provided with inner cells (23) and an inner element (22) comprising an outer surface provided with outer cells (24), each jamming element (18) engaging with an inner cell and an outer cell, one of the outer or inner elements being radially flexible at the level of the said cells and forming a friction means.

14. Pulley according to Claim 13, **characterized in that** the outer element (21) is secured to the rim (3).

15. *Pulley according to claim 13, **characterized in that** the inner element (22) is secured to the hub (4).*

16. Pulley according to Claim 13, 14 or 15, **characterized in that** the outer element is rigid and the inner element is flexible.

17. Alternator comprising a non-rotating part and a rotating part, the rotating part being provided with a shaft (2) and with a pulley (1) mounted on the shaft, the pulley (1) comprising a rim (3) and a freewheel device (5) of the type comprising a plurality of jamming elements (18) and at least one cage (19) for retaining the said jamming elements, **characterized in that** the freewheel device (5) comprises an outer element (21) comprising a bore provided with inner cells (23) and an inner element (22) comprising an outer surface provided with outer cells (24), each jamming element (18) engaging with an inner cell and an outer cell, one of the outer or inner elements being radially flexible at the level of the said cells and forming with the jamming elements a clamping means for the transmission of a torque.
